# EUROPEAN PATENT APPLICATION

(11) **EP 1 770 381 A2**
(43) Date of publication of application: **04.04.2007**
(21) Application number: 06019779.5
(22) Date of filing: 21.09.2006
(51) Int. Cl.: G01H 3/08

(54) **Aid device for setting inspection standard by calculating a characteristic quantity of waveform data**

(30) Priority: 30.09.2005 JP 2005288527
(71) Applicant: OMRON CORPORATION, Kyoto-shi, Kyoto 600-8530 (JP)
(72) Inventor: Mizoguchi, Kenji 801, Minamifudodo-cho, Shimogyo-ku Kyoto-shi Kyoto 600-8530 (JP); Hori, Masaki 801, Minamifudodo-cho, Shimogyo-ku Kyoto-shi Kyoto 600-8530 (JP)
(74) Representative: Kilian, Helmut

(57) **Abstract**

An aid device is provided to an inspection device for judging whether a target object of inspection is normal or not normal based on results obtained by calculating a characteristic quantity of waveform data obtained from the target object of inspection. The aid device provides data for determining an effective characteristic quantity and effective parameters for calculating the effective characteristic quantity for the judging. Given waveform data are divided into frames and a frame profile with a matrix-form data structure is obtained for each frame. A plurality of such frame profiles for same waveform data are obtained, and a profile describing characteristic quantities related to these waveform data is obtained from them. A plurality of such profiles are stored in a memory for different waveform data. A histogram of values at specified common position in the memory is calculated and displayed.

## Description

### Background of the Invention

This invention relates to an aid device for setting inspection standard.

Very many rotary devices incorporating a motor are used in automobiles or household appliances. If one considers an automobile, for example, rotary devices are found incorporated in the engine, the power steering, power seats and the transmission as well as elsewhere. Examples of household appliances include refrigerators, air conditioners and washing machines. When such rotary devices that are incorporated all over actually rotate, they produce sounds as their motors rotate.

Sounds that are thus produced include both those that are naturally produced by a natural operation and those that are produced because something is wrong. Causes of abnormal sound produced because something is wrong include abnormalities with bearings, abnormal internal contacts, unbalanced conditions and presence of foreign objects. Causes of abnormal sound that occurs once each time a gear wheel makes one revolution include a chipped gear, presence of a foreign object, a spot damage and momentary contacts between a rotating part and a stationary part inside a motor. Examples of sound within the audible range of 20Hz to 20kHz that is unpleasant to a listener include various kinds of sound, say, with frequency of about 15kHz. Thus, if a sound with this frequency component is being generated, it may be called an abnormal sound. It goes without saying that abnormal sound is not limited to this frequency.

If an unpleasant sound is present, not only is it unpleasant but there is also the possibility that a more serious damage is about to take place. For the purpose of quality control of various products, therefore, so-called sensory inspections relying upon sense of hearing or touch are normally carried out by inspectors at various production factories in order to determine presence or absence of an abnormal sound. Explained more in detail, such an inspection is carried out either by listening with an ear or by touching with a hand for sensing vibrations. "Sensory inspection" means an inspection carried out on a property by used a human sensory perception.

In recent years, a demand on sound quality of automobiles is quickly increasing. In other words, needs for automatic quantitative inspection are quickly increasing for driving parts carried on a car body such as engines, transmissions and power seats because the sensory inspections of the prior art type carried out by inspectors are only qualitative and too ambiguous.

In view of the above, inspection devices for abnormal sound are being developed for carrying out quantitative inspections reliably according to a clear standard. Such inspection devices are for the purpose of automating the process of sensory inspections, adapted to measure the vibrations or the sound of a driving part of a product by using a sensor and analyzing the frequency components of its analog signal by using a frequency analyzer based on the FFT algorithm, as disclosed in Japanese Patent Publication Tokkai 11-173909. The analysis of the analog signal may be performed by means of band pass filters.

The frequency analyzer mentioned above is capable of analyzing a time-signal in frequency domains by a fast Fourier conversion algorithm. Since the frequency domain of abnormal sounds is more or less limited, components can be extracted from the domain where abnormal sounds are likely to be generated, and characteristic quantities of such extracted components are obtained. From such characteristic quantities, presence and absence of abnormality and its cause can be estimated by Fuzzy Inference.

Automatic judgments are possible by means of such an inspection system for abnormal sound according to a standard after it is set once, and the results of the inspection as well as the waveform data at the time of the inspection can be saved in a memory device within the system.

With such a system, however, optimum characteristic quantities to be used for the inspection and the parameters for the calculation of the characteristic quantities must be selected by a person, depending on his/her experience and inspiration (or know-how). This means that a very large number of process steps are required to select characteristic quantities and parameters for calculating the selected characteristic quantities from over thousands of data on abnormality judgment results, requiring time and labor.

In the case of a wave analysis, for example, a waveform to be inspected must be characterized by way of its characteristic quantities. There are usually a number of parameters for obtaining each of the characteristic quantities and the value of each characteristic quantity changes as their setting is changed. If the parameters are selected appropriately, characteristics of this waveform will appear more distinctly at the time the waveform analysis as the value of the characteristic quantity. This means that it is important to adjust the parameters.

Since there are many setting patterns even for a single parameter, it is very difficult to compare the results of calculations of characteristic quantities while the setting is changed, and it is quite difficult to set the parameters appropriately. Since it is also difficult to check in which of characteristic quantities the characteristic will appear most significantly because there are many combinations of parameters, the work becomes very cumbersome and time-consuming.

Thus, there are many characteristics quantities and parameters that are used by an inspection system for abnormal sound and the search for characteristic quantities and the tuning of parameters are complicated. Moreover, there are situations where normal (good) products and abnormal (no good) products cannot be accurately separated even if such a search for characteristic quantities is carried out. In such a case, since the kind of characteristic quantities to be selected and the parameter space are infinite, it is difficult to judge whether these two groups cannot be separated (1) because information for separating data is basically obtained, or (2) because the search in the infinite space is not sufficient.

Thus, even in the situation of (1), a search will be made in the infinite space and a useless work will be further continued if no scientifically convincing explanation is provided.

### Summary of the Invention

It is therefore an object of this invention to provide an aid device capable of judging whether good no no-good products can be separated when determining characteristic quantities to be used for carrying out an inspection of abnormal sound and parameters of such characteristic quantities and providing data for obtaining useful characteristic quantities and parameters if separation is possible.

An aid device according to this invention is for an inspection device for judging whether a target object of inspection is normal or not normal based on results obtained by calculating a characteristic quantity of waveform data obtained from the target object of inspection, and is adapted to provide data for determining an effective characteristic quantity and effective parameters for calculating the effective characteristic quantity for the judging, being characterized as comprising a frame profile calculating means for dividing given waveform data into frames and obtaining for each of these frames a frame profile having a matrix-form data structure describing characteristic quantities with a characteristic quantity axis and a frequency axis, a profile calculating means for obtaining a plurality of frame profiles obtained by the frame profile calculating means for same waveform data and obtaining from the plurality of frame profiles a profile having a matrix-form data structure describing characteristic quantities by a characteristic quantity axis and a frequency axis related to the waveform data, a memory means for storing a plurality of profiles obtained by the profile calculating means for a plurality of sets of waveform data, and a histogram generating means for carrying out a calculation process on the values of the characteristic quantities at a specified common position in the matrix-form data structure of the plurality of profiles stored in the memory.

The histogram generating means may be characterized as generating and displaying a histogram of the values of the characteristic quantity at a specified common position.

The aid device of this invention may further comprise means for simultaneously displaying the plurality of profiles stored in the memory means and means for specifying a common position on the frequency axis of the simultaneously displayed profiles, the histogram generating means comparing values of characteristic quantities at a specified common position and causing the compared values to be displayed.

In the above, the histogram generating means may be adapted to generate a radar chart from the values of the characteristic quantity at the specified common position and to cause the radar chart to be displayed.

According to another embodiment of the invention, the histogram generating means may be adapted to generate a statistical profile by carrying out a statistical process on the plurality of profiles belonging to the same group and stored in the memory means. The aid device may further comprise a profile comparing means for comparing the statistical profile with another profile of waveform data that belong to a different group from the same group. According to still another embodiment of the invention, the aid device may further comprise a profile comparing means for comparing the statistical profile with another statistical profile of waveform data that belong to a different group from the same group.

Throughout herein, the following definitions will be used:
"Frame profile" means a data structure expressing a characteristic quantity in a matrix form with a characteristic quantity axis and a frequency axis when waveform is (numerically) represented; it is generated for one frame extracted from target waveform data to be processed.
"Profile" is a matrix containing a characteristic quantity value of one waveform data item in the two-dimensional (frequency x characteristic quantity) space, thus representing a characteristic of a waveform in a quantitative manner; it is generated by using a plurality of frame profiles obtained from the same waveform data.
"Statistical profile" describes the property of a plurality of profiles (each profile corresponding to one waveform) as a group by carrying out a statistical process.

### Brief Description of the Drawings

Fig. 1 is a block diagram of an aid device embodying this invention.
Fig. 2 is a block diagram of a portion of the aid device of Fig. 1 according to a first embodiment of the invention.
Fig. 3 shows an example of profile.
Fig. 4 is a drawing for showing the relationship between the profile time change and the profile.
Fig. 5 is a block diagram of the profile generating part of Fig. 2.
Fig. 6 is an example of display.
Fig. 7 is a block diagram of the histogram display parts of Fig. 6.
Fig. 8 is a flowchart of the functions and operations of the device according to the first embodiment of the invention.
Fig. 9 is a block diagram of a portion of the aid device of Fig. 1 according to a second embodiment of the invention.
Fig. 10 is a block diagram of the profile time change display part.
Fig. 11 is an example of display on the profile time change display part.
Fig. 12 is a block diagram of the profile comparing part.
Fig. 13 is an example of display on the profile comparing part.
Figs. 14A and 14B are examples of radar chart.
Fig. 15 is a flowchart of the functions and operations of the device according to the second embodiment of the invention.
Fig. 16 is a block diagram of a portion of the aid device of Fig. 1 according to a third embodiment of the invention.
Fig. 17 is a drawing for showing the generation of a statistical profile.
Fig. 18 is a block diagram of the statistical profile generating part.
Fig. 19 is a block diagram of the statistical profile generating part with a different internal structure.
Fig. 20 is a block diagram of the profile comparing part.
Fig. 21 is a drawing for showing the function of the knowledge profile transfer part.
Fig. 22 is a flowchart of the functions and operations of the device according to the third embodiment of the invention.
Fig. 23 is a block diagram of a portion of the aid device of Fig. 1 according to a fourth embodiment of the invention.
Fig. 24 is a flowchart of the functions and operations of the device according to the fourth embodiment of the invention.
Fig. 25 is a drawing for explaining a variation.

### Detailed Description of the Invention

First, there will be simply described the inspection device for abnormal sound which serves to set the characteristic quantities and/or parameters that are finally determined by using an aid device of this invention.

This inspection device is basically structured so as to preliminarily process waveform data obtained by a vibration sensor or a sound microphone, to thereafter calculate a plurality of specified characteristic quantities and to make a good/no good/uncertain judgment by using effective ones of the calculation results. A plurality of kinds of filters such as band pass filters, low pass filters and high pass filters are used in the pre-process and many kinds of characteristic quantities to be calculated are provided.

For any target object to be inspected, there exist characteristic quantities that are effective in judging good or no good, and there are situations where it turns out to be useless to carry out calculations of characteristic quantities that are not very effective. What are effective characteristic quantities change, however, depending not only upon the target object to be inspected but also upon the kind of abnormality. There is no characteristic quantity that is effective for all target objects. According to the present embodiment, there is provided a function of providing data for determining characteristic quantities that are appropriate for the target object of inspection. Each characteristic quantity will take different values if parameters are varied, although the method of calculation is determined, and this also affects the result of judgment. In other words, even if a characteristic quantity is originally an effective one, it may give rise to an incorrect judgment result if wrong parameters are used. Thus, the aid device according to this invention is provided with the function of providing data for comprehensively discovering appropriate combinations of characteristic quantities and parameters.

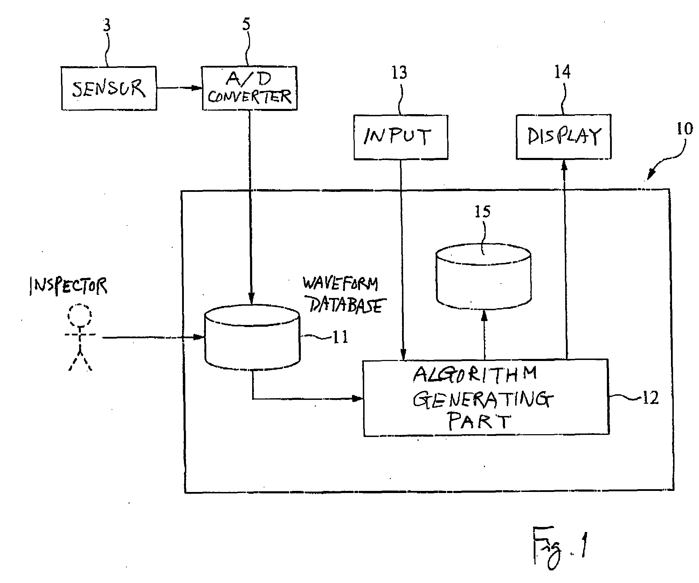

Fig. 1 shows an aid device 10 embodying this invention, comprising a waveform database 11 for storing sample data, an algorithm generating part 12 for generating characteristic quantities and rules that are used by the inspecting device when it makes a judgment of good or no good based on sample data (waveform data of normal and abnormal data) stored in this waveform database 11, and a memory 15 for storing characteristic quantities generated by the algorithm generating part 12. This aid device 10 may be comprised of a computer such as a personal computer, provided with an input device 13 such as a keyboard and a mouse, as well as a display device 14. If necessary, an external memory or a communication function may be provided for communicating with an external database for obtaining needed data.

The waveform data stored in the waveform database 11 may include those obtained by picking up the sound or the vibration when a sample object is operated by using a sensor 3 such as an acceleration pickup disposed in contact with or near that sample (and amplifying if necessary), just as in the case of an ordinary sensory inspection, and also by using an AD converter 5 to convert into digital data, as well as those downloaded from another separated prepared database. The waveform data are stored such that their kind (whether normal or abnormal data) can be identifiable. For this purpose, each waveform data item may be stored in correlation with its kind or a holder for normal data and another holder for abnormal data may be separately provided, each holder holding only waveform data of the corresponding kind. The waveform data may be separated according to the kind, for example, by an inspector according to his/her judgment as they are received by the sensor 3. Alternatively, the waveform data may be taken in first and them replayed such that the inspector can judge by listening to the sound, etc. When sample data are taken in from target objects that are already known to be a normal object or a defective object, the kind may be preliminarily designated as the waveform data are taken in such that the correlation is obtained automatically between the kind and the waveform data.

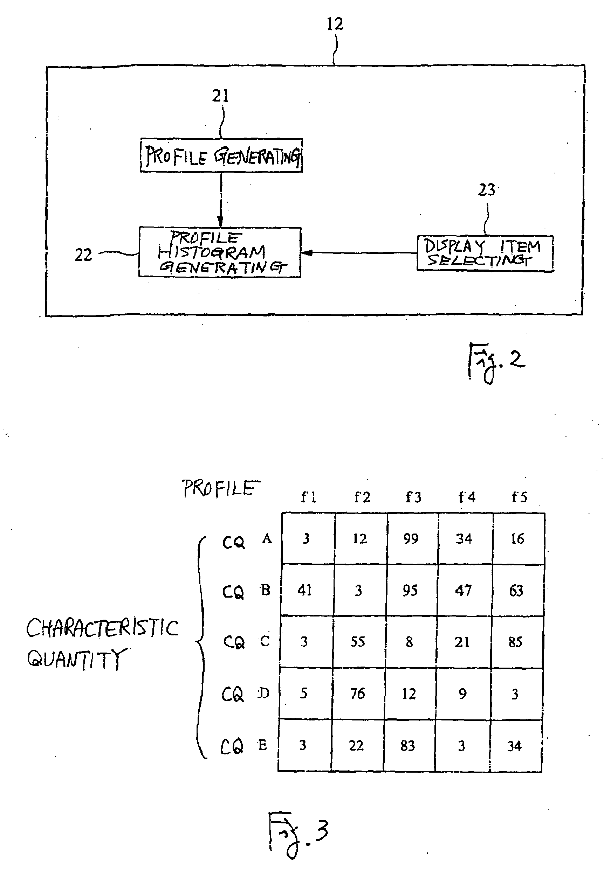

Fig. 2 shows an example of the internal structure of the algorithm generating part 12. According to this example, the fluctuation of the group (referred to as "the OK Group") consisting of the waveform data from good (normal) products and a judgment is made regarding whether a judgment between good or no good can be made based on an inspection of abnormal sound. As shown in Fig. 2, this algorithm generating part 12 includes a profile generating part 21, a profile histogram display part 22 and a display item selecting part 23.

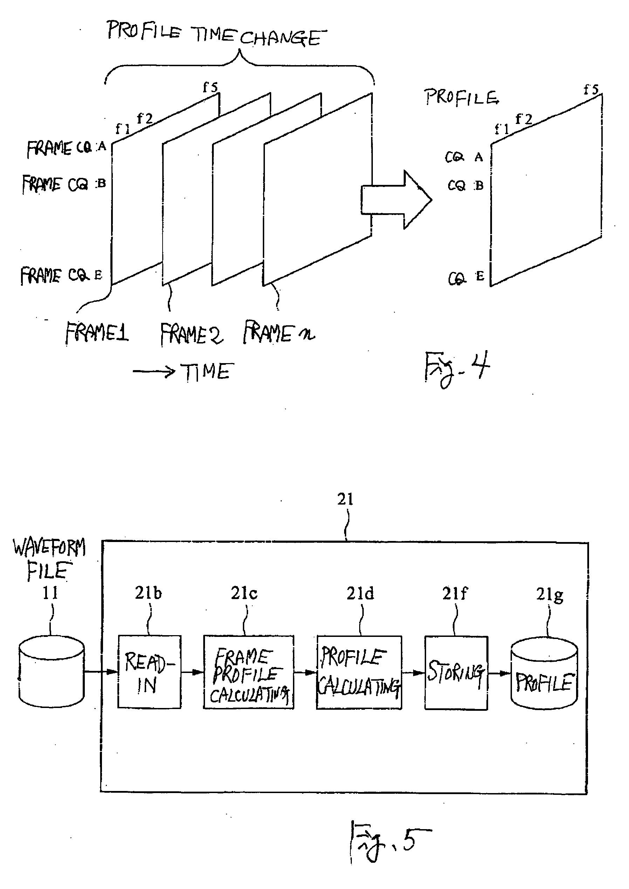

The profile generated by the profile generating part 21 is a matrix, as shown in Fig. 3, for showing the characteristics of a waveform quantitatively by storing the current values of its characteristic quantities (CQ) in a two-dimensional space (frequency (f) x CQ). The profile may include data on the time change of frame profiles (characteristic matrices) that are produced in units of frames each selected and extracted from the waveform data being processed, as shown in Fig. 4. The elements corresponding to the same characteristic quantity and frequency coordinates are extracted from the frames and data-compressed (converted to a scalar quantity) by a set algorithm and the scalar quantity thus obtained is placed at the same position along the characteristic quantity and frequency axes forming the profile for that waveform. A profile for this waveform is obtained by carrying out this process for all elements. In Fig. 4, "profile time change" means that data on the time change are included in the process of obtaining the profile.

The algorithm for obtaining the elements of this profile may make use of various quantities such as averages and peak-to-peak values. The choice may be entered as an initial value into the profile generating part 21 or manually by the user through the input part 13 if there are a plurality of choices. A specified algorithm may be registered through the input part 13.

As the characteristic quantity on the vertical axis that forms the profile, all characteristic quantities preliminarily registered in the profile generating part 21 may be set or may be displayed on the display device 14 such that the user can make a selection. The frequency on the horizontal axis means the frequency band where the characteristic quantity of the waveform data is calculated. This may be determined by the upper and lower limits of a band pass filter. Values f1, f2, ... that define the frequency axis may be selected as a preliminarily prepared parameter set or may be entered through the input part 13 by the user. The frequency bands thus formed by parameter sets may partially overlap or a certain frequency band may be entirely within another frequency band. Since a characteristic quantity may become effective or ineffective for the purpose of judgment between good and no good, depending on its combination with the extracted frequency band (as a parameter), appropriate combinations can be discovered if various frequency ranges are set as parameters (elements) that form the frequency axis. If no appropriate combination is found although a large number of frequency ranges are prepared, it can at least be concluded that no group can be recognized (considered appropriate) with that characteristic quantity.

Fig. 5 is a functional block diagram for showing the internal structure of the profile generating part 21 for generating profiles explained above. As shown, the profile generating part 21 is provided with a read-in part 21b for reading in specified ones of the waveform data from the waveform database 11, a frame profile calculating part 21c for calculating a frame profile (a characteristic matrix with characteristic quantities corresponding to the elements of the profile for each frame) related to the waveform data read in by the read-in part 21b, a profile calculating part 21d for obtaining time change data of the frame profile of each frame obtained by the frame profile calculating part 21c according to preliminarily set parameters (such as the algorithm (e.g., peak-to-peak algorithm) for obtaining each element of a profile including time change data) and creating a profile of the target waveform data to be processed, and storing part 21f for storing the profiles of the individual waveform data obtained by the profile calculating part 21d in the profile database 2 1 g.

The read-in part 21b is adapted, for example, to access the waveform database 11, to display on the display device 14 a list of waveform data (stored in the database) that can be processed and to request the user to make a choice. After the file name of the waveform data specified through the input device 13 is obtained, the corresponding waveform data are read out of the waveform database 11 based on this file name and are transmitted to the frame profile calculating part 21c. Since the waveform data stored in the waveform database 11 are registered in correlation with their kind (whether good (OK data) or no good (NG data)) as well as the type of workpiece and data of other types, the read-in part 21b can refer to such data that are stored in the waveform database 11 in correlation with the individual files and extract only such waveform data that match specified conditions for renewing the list. In the above, it may be a single waveform data item or a plurality of waveform data that are specified.

The frame profile calculating part 21c divides the obtained waveform data into frames, obtains specified characteristic quantities A, B, etc. for each of the frequency bands (f1, f2, etc.) as shown in Figs. 3 and 4 for each frame and registers the results of the calculation at corresponding positions. This calculation can be done by a function similar to the one for the extraction of characteristic quantities by an ordinary inspection device for abnormal sound. Explained more in detail, an inspection device for abnormal sound normally uses filters of various kinds in a preliminarily step to extract waveform data for a desired frequency band and carry out a set calculation for the extracted waveform data after the processing by the filters. Although there are many target objects for the calculation process because set characteristic quantities are obtained for each of the many extracted frequency bands, a prior art technology may be used for the calculation of characteristic quantities for obtaining the individual elements. In the above, examples of the characteristic quantity include many such as RMS (effective value), AMX (peak-to-peak value) and the average.

Regarding the division into the frames, this may be preliminarily set in the profile generating part 21 as in the case of the setting characteristic quantities, or the setting may be effected through the input device 13. The setting may be effected by specifying the frame width (the time duration of one frame), the data size for each frame, or the degree of overlapping (including zero overlapping) with the frames in front and behind. It is preferable to set a plurality of parameters related to the way of cutting out a frame and to let the user choose and select one of them through the input device 13 or to use a preliminarily selected value as an initial value and to allow this to be changed whenever necessary. If such an input of parameter set or the like is allowed from the input device 13, it is preferable to set the structure such that such inputted parameter set or a set of characteristic quantities be provided to the profile generating part 21 and that the profile generating part 21 generate a frame profile based on such provided parameters or characteristic quantity.

As is clear from Fig. 4, the profile generating part 21 generates a frame profile corresponding to a plurality of frames for one waveform data item. This frame profile corresponding to a plurality of frames is stored in a specified temporary storing means (a buffer memory). Such a temporary storing means may be provided to the frame profile calculating part 21c such that all data of profile time change are transmitted together to the profile calculating part 21d after they are generated or may be set to the profile calculating part 21d or an external memory means such that the frame profiles come to be individually stored in such an external memory means as soon as generated.

The profile calculating part 21d is adapted to generate one profile by gathering time change data, based on the plurality of frame profiles corresponding to one waveform data item obtained by the frame profile calculating part 21c (by carrying out the process shown in Fig. 4). This may be done, for example, by considering the xth position along the characteristic quantity axis and the yth position along the frequency axis as the target of processing, carrying out a calculation process for obtaining time change data (such as peat-to-peak) for the value of characteristic quantity at the point with coordinate (x, y) in the two-dimensional space (spanned by these two axes) for each frame profile, and storing the result of this calculation process in the profile at the position with coordinate (x, y). Thereafter, the aforementioned calculation process is carried out for each coordinate from x=1 to x=X (X being the set number of characteristic quantities) while y=1 (for obtaining the value of each coordinate (element) of the profile) and the value of each element of the profile for the row of y=1 is obtained. This calculation is repeated, each time by incrementing the value of y by 1, and the frequency axis of the profile is generated one row at a time. After this is repeated until y reaches the value of Y (= the number of parameters on the frequency axis), a characteristic quantity value (with the time change taken into consideration) comes to be stored at each element that forms the profile corresponding to the waveform data item, and the generation of the profile is completed.

The profile thus generated by the profile calculating part 21d is stored by the storing part 21f in the profile database 21 g in correlation with the information on the target waveform data for processing. The correlating information on the target waveform data includes at least the identification whether it is a good (OK data) product or a defective (NG data) product and information for identifying the waveform (such as the file name and ID number).

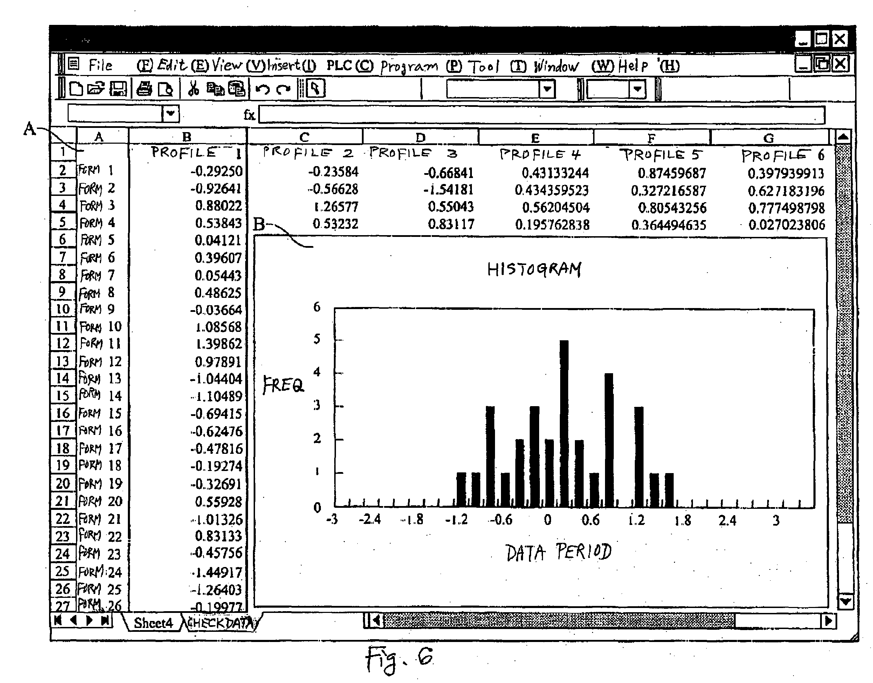

The profile histogram display part 22 is for obtaining a histogram regarding a display item selected by the display item selecting part 23 from a plurality of waveform profiles and displaying it on the display device 13. As shown in Fig. 6, a plurality of profile items regarding a plurality of waveform data (combination of characteristic quantity and frequency, corresponding to each element comprising the profile) are displayed, and the values of these profile items are outputted as an input (selection) screen A in the form of a table. The user selects a profile item desired to be displayed in the form of a histogram, creates a histogram of each value that forms a row of the selected profile item and causes the created histogram (B) to be outputted. This selection may be made in any of many manners as the ways of selecting a row in software for calculating a table. Fig. 6 shows an example wherein Profile Item 1 is being selected. The waveforms that are listed on the input screen are those belonging to the same group (OK or NG).

From this histogram thus displayed, the level of fluctuation of that profile item can be understood immediately. In the case of a single group and especially if the peak is high and steep and its spread is narrow, it may be considered an appropriate profile item for recognizing this group, and the control of this group (or the judgment whether anything belongs to this group or not) becomes possible. If there are a plurality of peaks (a plurality of groups) or if the peak is low and gently sloped, spreading widely, it may be concluded to be an inappropriate profile item for recognizing this group, and the control of that group becomes difficult.

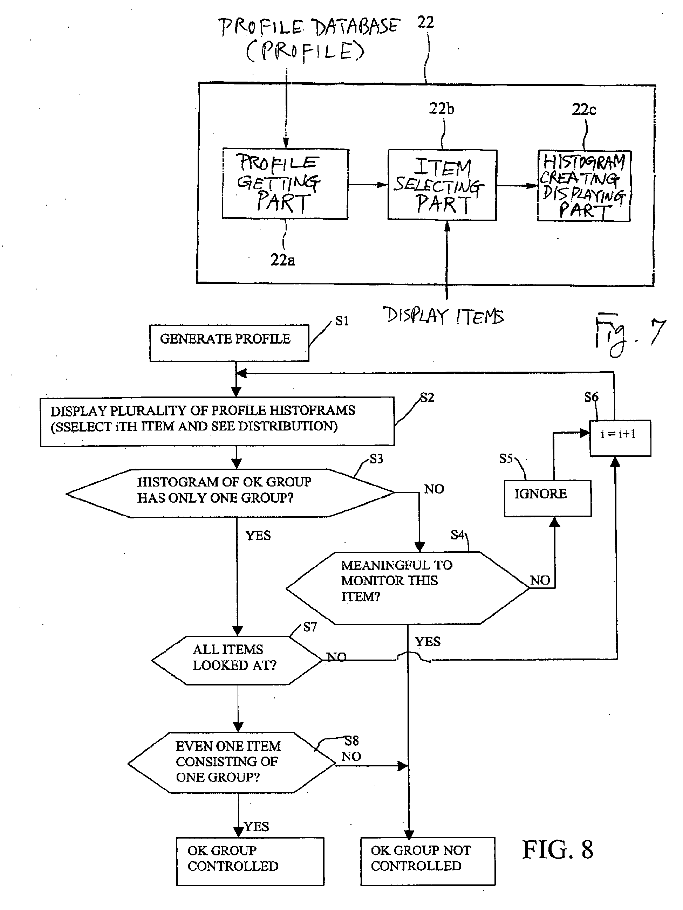

Fig. 7 is a functional block diagram for showing the internal structure of the profile histogram display part 22 for displaying a histogram as described above. As shown, the profile histogram display part 22 comprise a profile getting part 22a for getting profiles of specified waveform data (such as normal data of good (OK) products in the present example) from the profile database and a display item selecting part 22b for creating and displaying on the display device 14 a input screen for profile items as shown in Fig. 6, based on a plurality of profiles obtained by the profile getting part 22a and transmitting specified contents to a histogram creating and displaying part 22c on the downstream side.

The profile getting part 22a may serve, for example, to get profiles of waveform data judged to be a normal (OK) product. Because each profile is correlated with information on the waveform data, the judgment result which is one of the correlating information can be referenced, and only the profiles associated with normal products can be extracted.

The display item selecting part 22b serves to extract data that correspond to a specified display item and to transmit them to the histogram creating and displaying part 22c. If Profile Item 1 has been selected, as in the example shown in Fig. 6, the value of Profile Item 1 is extracted from each of the waveform data, and the extracted values are transmitted to the histogram creating and displaying part 22c.

The histogram creating and displaying part 22c creates a histogram, based on the received data and displays it on the display device 14. The function (algorithm) for creating a histogram is well known and hence will not be described herein.

For the convenience of description, the display item selecting part 22b and the histogram creating and displaying part 22c are together referred to below as the histogram generating means.

Fig. 8 is a flowchart of the function (operation) of the process described above. The process starts by operating the profile generating part 21 to thereby generate profiles of waveform data on the basis of normal waveform data from good products and to store them in the profile database 2 1 g (Step S1). Next, the profile histogram display part 22 is operated to read out a plurality of profiles on good (OK) products stored in the profile database 2 1 g and the data thus read out are displayed in the form of a table as shown in Fig. 6. Then an item (the ith) is selected by the display item selecting part 23. This may be done manually by the operator, or the selection may be made automatically by incrementing i from i = 1 sequentially. If the ith item is selected, a histogram is created for this selected ith item and the result is outputted (Step S2), as shown at B in Fig. 6.

Next, it is judged whether the histogram of good (OK) products thus displayed consists of one group or not, that is, whether or not it forms as a whole a single peak (Step S3). This judgment is made visually by the user, and the result of this judgment is inputted through the input device 13. If the histogram consists of only one group, it may be estimated that it is effective as an item (characteristic quantity + parameters) for judging whether a target object belongs to this group (of good products). If it has two hills or does not consist of only one hill, on the other hand, it may be concluded that no judgment can be made on the basis of this item. Thus, if the judgment result in Step S3 is NO, it is determined whether or not it is meaningful to monitor this item (Step S4). If it is determined to be meaningful (YES in Step S4), it is concluded that the OK group is not controlled, and the design and/or production steps and the items to be observed will be reviewed

If it is determined meaningless to monitor the item which does not result in one group (NO in Step S4), this item is ignored (Step S5) and the value of i is incremented (Step S6) before the routine returns to Step S2 to display another histogram and to judge whether it consists of one group or not.

If the displayed histogram consists of only one group (Yes in Step S3), it is examined whether all items have already been checked (Step S7). If not all items have been checked (NO in Step S7), the next item yet to be considered is checked (Step S6). If there is at least one item for which the histogram consists of only one group (YES in Step S8), it is concluded that good (OK) products are being produced under a control. If there is no item for which the histogram consists of only one group (NO in Step S8), it is judged that the OK group cannot be controlled.

In a situation where it is only desired to judge whether a control is possible or not, a flag may be raised if the judgment result in Step S3 is YES such that the judgment in Step S8 can be effected simply by checking this flag. In a situation where details of the items are desired, a flag may be provided for each item such that the flag of the item for which the judgment result in Step S3 is YES or such items may be stored in a buffer memory such that they can be later checked.

Even in a situation where there is at least one item for which the histogram has only one group (such that the judgment result in Step S3 becomes YES), if there is an important item for which the histogram does not have only one group but which is meaningful to monitor, the judgment in Step S4 is not necessary.

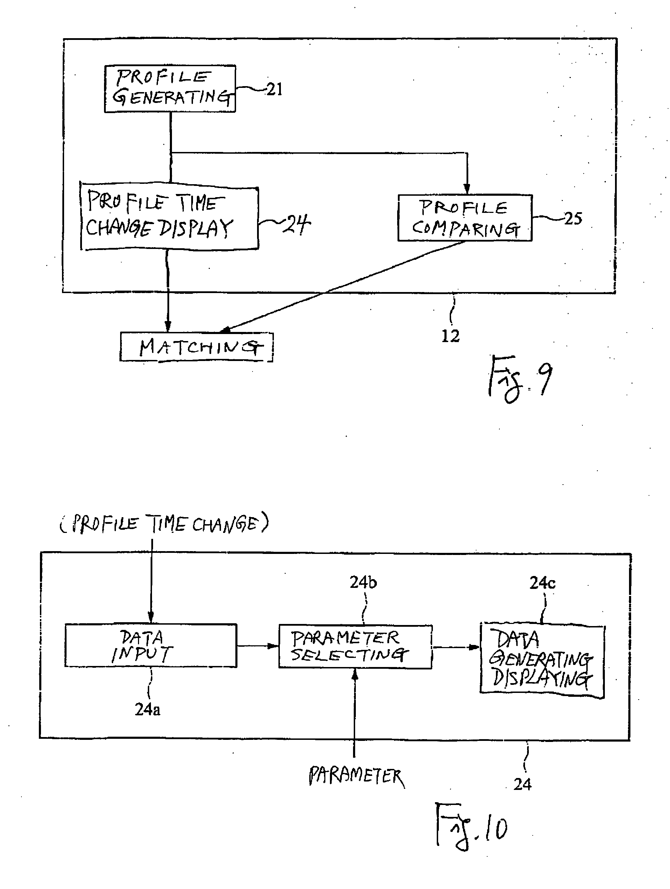

Fig. 9 shows a portion of the aid device of Fig. 1 according to a second embodiment of the invention. Components which are similar or equivalent to those shown in Fig. 2 are indicated by the same numerals and will not be described repetitiously. The second embodiment is characterized as being adapted to judge whether an analysis is possible or not where there are a plurality of sets of normal (OK) data for good products and a plurality of sets of abnormal (NG) data for no-good products. According to the second embodiment of the invention, the algorithm generating part 12 of the aid device includes not only a profile generating part 21 but also a profile time change display part 24 and a profile comparing part 25. The profile generating part 21 is structured as above with reference to the first embodiment.

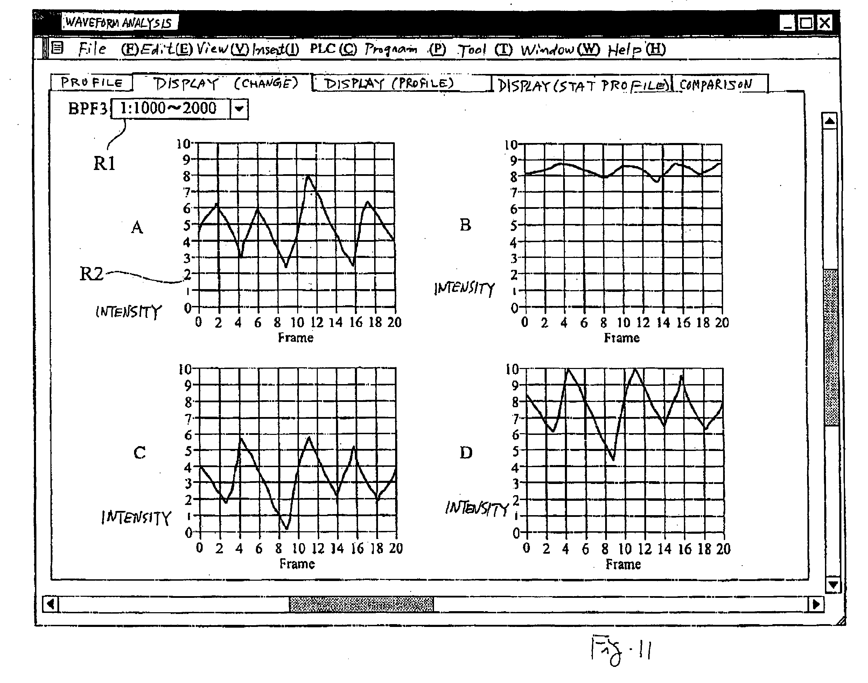

As shown in Fig. 10, the profile time change display part 24 is provided with a data input part 24a, a parameter selecting part 24b and a data generating-displaying part 24cc. The data input part 24a is adapted to receive data on each frame profile of specified waveform data, or profile time change data, from the frame profile calculating part 21c of the profile generating part 21. This function may be realized, for example, by obtaining from the profile generating part 21 a frame profile consisting of data that result while the profile generating part 21 proceeds to generate a profile about given waveform data.

The profile time change display part 24 can execute and display a plurality of sets of waveform data. It may include a memory for these sets of waveform data and the data input part 24a may be adapted to store frame profiles for the individual sets of waveform data in a memory means.

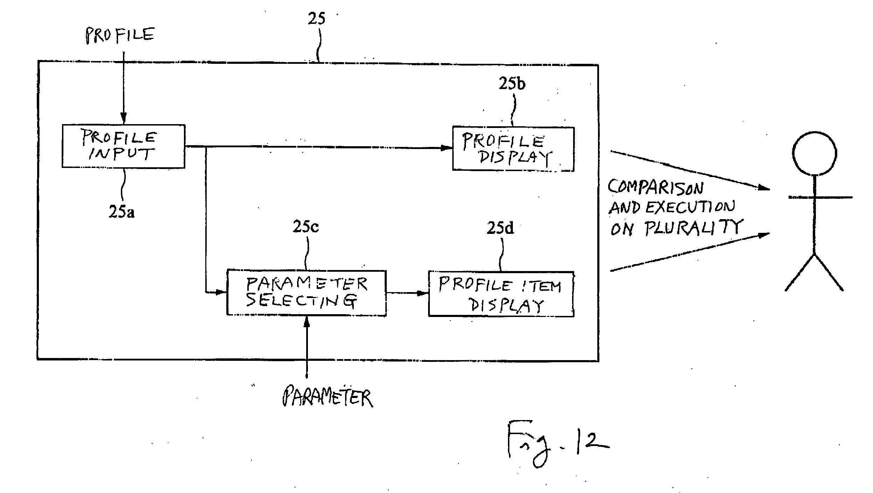

The parameter selecting part 24b is adapted to select desired parameters from one of the axes (say, the frequency axis) of the profile specified through the input device 13. This is to say that the specified parameters (items) of the elements that comprise the frame profile of the obtained waveform data are selected as target data to be processed and the corresponding data are transmitted to the data generating-displaying part 24c on the downstream side. The aforementioned parameter that is specified and selected is one of f1, f2, ... in the example of Fig. 3. The selection of the parameter may be made by setting a parameter input area R1 as shown in Fig. 11 on the display device 14 and by using a pull-down menu format for specifying a parameter. The items to be listed by the pull-down menu format are matched to the preliminarily set items such as f1, f2, ... (such as frequency band, upper and lower limits of band pass filter).

The data generating-displaying part 24c arranges the values of a specified characteristic quantity regarding the obtained parameter (such as one of the items on the frequency axis) in a time-sequence, creates a broken-line graph by connecting these values and outputs in a display area R2, as shown in Fig. 11. In the example of Example 11, there are four display areas R2 provided and hence time change data can be displayed regarding up to four sets of waveform data.

The characteristic quantity to be displayed may be a controllable characteristic quantity displaying good products obtained in the first embodiment of the invention as a single group or a characteristic quantity that is convenient for separating the two groups obtained by the profile comparing part 25, as will be described below. It may be arranged such that any characteristic quantity can be specified as in the case of setting parameters for the frequency axis or that all characteristic quantities are sequentially set.

The profile comparing part 25 is for comparing a plurality of profiles. If a profile of good product and a profile of no-good product are compared and a parameter resulting in a large difference is discovered, such a parameter may be considered suitable for judging good and no-good products. If a clear difference is not observable, it can be proved scientifically that good and no-good products cannot be separated or distinguished.

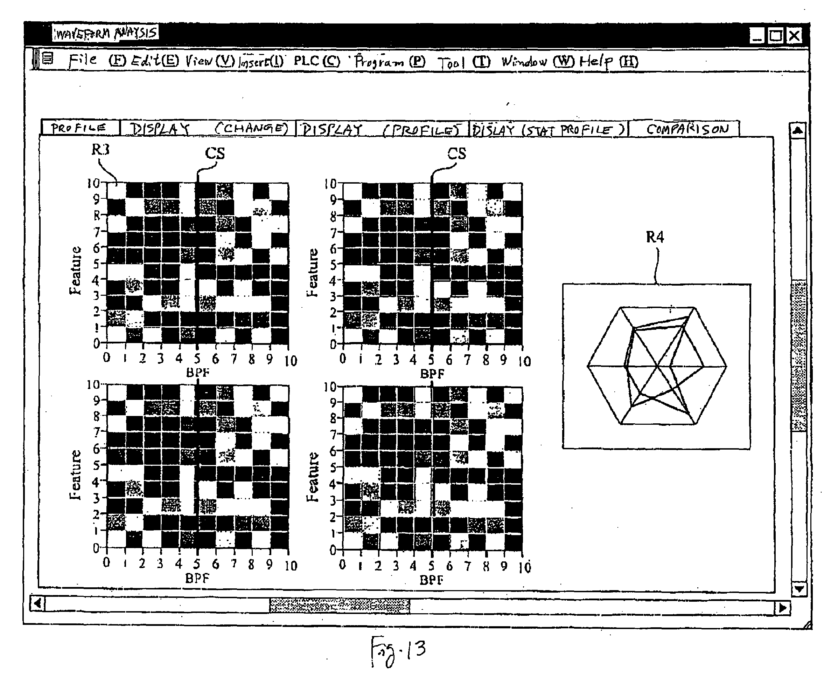

As shown in Fig. 12, the profile comparing part 25 is provided with a profile input part 25a, a profile display part 25b, a parameter selecting part 25c and a profile item display part 25d.

The profile input part 25a is for receiving data on the profile of specified waveform data from the profile calculating part 21d of the profile generating part 21. This function may be realized, for example, by obtaining from the profile generating part 21a frame profile consisting of data that result while the profile generating part 21 proceeds to generate a profile about given waveform data. This may also be realized by reading out the profile of the specified waveform data from the profile database 2 1 g. The profile obtained by any of these various methods is recorded in a temporary memory means adapted to store profiles of a plurality of sets of waveform data.

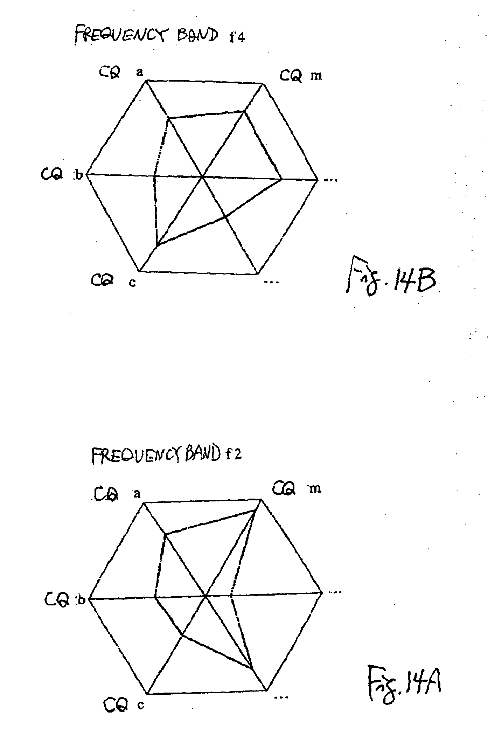

The profile display part 25b displays the profile obtained by the profile input part 25a on a profile display area R3 as shown in Fig. 13. The profile display area R3 is in the form of a two-dimensional matrix with its vertical axis serving as the characteristic quantity axis and its horizontal axis serving as the frequency axis according to the form of the profile. The elements that partition the two-dimensional space match the obtained profile data. Since each of the elements that comprise the profile are numerical data, their numerical values may be directly displayed or the display may be varied according to the color or color density such that the display may become more easily understood visually. When a plurality of profiles of waveform data belonging to the same group are displayed, for example, if the colors and densities of the same elements (having the same coordinates along the characteristic quantity and frequency axes) are close to each other, it can be perceived that this combination of characteristic quantity and frequency is appropriate for distinguishing this group. If the color and density for the same elements are different, on the other hand, it can be understood that they are not appropriated for identifying this group. When a plurality of profiles of waveform data belonging to different groups are displayed, if the color and density of the same element are different, it is understood that this combination of characteristic quantity and parameter is appropriated for distinguishing these two groups.

The parameter selecting part 25c is adapted to select desired parameters from one of the axes (say, the frequency axis) of the profile specified through the input device 13. This is to say that the specified parameters (items) of the elements that comprise the frame profile of the obtained waveform data are selected as target data to be processed. Explained more specifically, a cursor CS is displayed in the profile display area R3 as shown in Fig. 13 such that the items indicated by the cursor CS become the selected parameters. The cursor CS can be moved horizontally by operating on the input device 13 (such as a mouse). Four cursors CS appearing individually in the four profile display areas R3 may be adapted to move in correlation such that the same parameter are selected from the frequency axis in the four profile display areas R3.

The profile item display part 25d serves to obtain the value of each characteristic quantity for the parameters selected by the parameter selecting part 25c and to display them in the profile item display area R4 set on the display device 14. The display may be made in the form of a radar chart with axes representing profile items obtained by cutting each profile by the axis of the cursor CS. As the position of the cursor CS is changed, the display of the radar chart also changes, say, from Fig. 14A to Fig. 14B.

Figs. 14A and 14B show for one profile but it is for the convenience of disclosure. Where there are four profiles, as in the illustrated example, radar charts for these four profiles are displayed in a superposed manner such that it can be determined visually whether the characteristic quantities of the parameters (frequency bands) specified by the cursor CS take similar values or significantly different values. As the cursor CS is moved, the displayed conditions of the radar charts of the four profiles also change and the conditions of the values of the characteristic quantities can be easily ascertained. Thus, it can be determined easily how characteristic quantities belonging to the same group come to take similar values or different values as different items along the frequency axis are selected. If no appropriate parameters or characteristic quantities can be found although the cursor CS is moved from one end to the other, it can be proved scientifically that good products and no-good products cannot be separated.

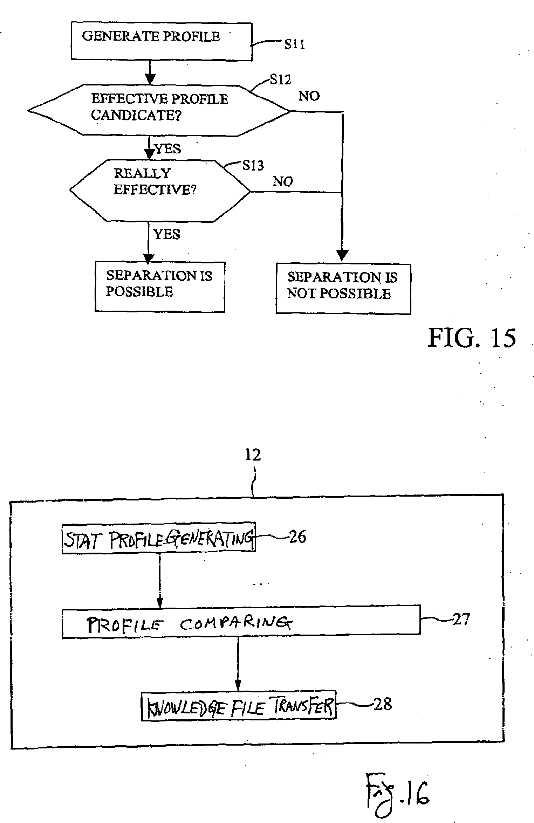

Fig. 15 is a flowchart of the functions and operations of the device according to the second embodiment of the invention. As the profile generating part 21 is operated to read out of the waveform database 11 a plurality of sets of normal waveform data for good products and a plurality of sets of abnormal waveform data for no-good products to generate profiles of these waveform data (Step S11). The generated profiles are transmitted to the profile comparing part 25 and the profile time change data generated during the course of generating the profiles are transmitted to the profile time change display part 24.

Next, the profile comparing part 25 is operated and a judgment is made whether there is an effective profile candidate (Step S12). This is done by looking for such an effective profile candidate while watching the profiles and radar charts that come to be displayed as the profile comparing part 25 is operated. If no effective profile capable of separating good products from no-good products is found (NO in Step S12), it is concluded that the OK/NG separation cannot be done. According to the present embodiment of the invention, the final determination whether an effective profile or not is made by the user while looking at the display screen. Alternatively, the profile comparing part may be allowed to automatically judge if the values of characteristic quantities of good and no-good products are separated by an amount greater than a preliminarily defined threshold value and also depending upon whether or not the values of a characteristic quantity remain within a small range.

If the presence of effective profile candidate is ascertained (YES in Step S12), the profile time change display part 24 is operated to compare the OK and NG time change profiles of the effective profile candidate to ascertain whether it is really effective or not (Step S 13). This is also effected by the user while observing the display screen. In this situation, too, the profile comparing part 25 may be allowed to automatically judge if the time change data (such as peak-to-peak and average values) are calculated both for good and no-good products for the effective profile candidate and if they are farther apart than a predefined threshold value and the time change data for good products are close together (remaining inside a specified range). If it is determined to be really effective (YES in Step S13), it is judged that the OK/NG separation is possible and if it is determined not to be really effective (NO in Step S13), it is determined that the OK/NG separation is not possible.

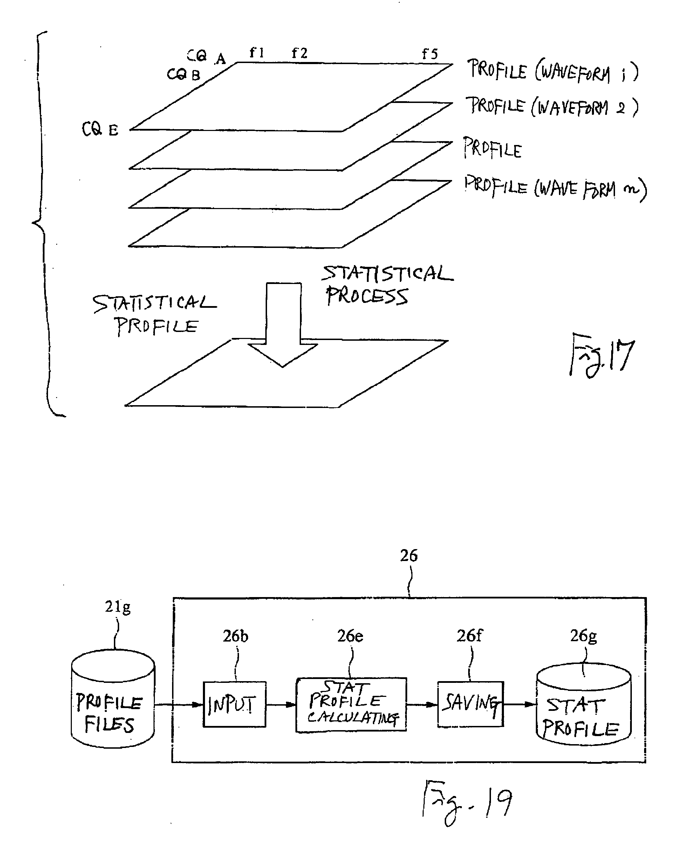

Fig. 16 shows a portion of the aid device of Fig. 1 according to a third embodiment of the invention. This is a situation where there are many normal (OK) data for good products and many abnormal (NG) data for no-good products to form groups, that is, the sample numbers are much larger than in the case of the second embodiment such that the judgment of whether the two groups can be separated by comparing them is made and if the separation is possible, specific knowledge regarding the judgment will be acquired. A process of the third embodiment may well be carried out by increasing the sample number N after the device according to the second embodiment is used and the result of the judgment in Step S 13 is YES. Although a process of the third embodiment of the invention may be carried out without using the process according to the second embodiment of the invention but by preliminarily collecting a large number (such as 100 to 1000) of samples to execute according to the third embodiment but if it is judged by executing the second embodiment preliminarily that the OK/NG separation is difficult, it will be preferable not to collect useless samples.

As shown in Fig. 16, the aid device according to the third embodiment of the invention is provided with a statistical profile generating part 26, a profile comparing part 27 and a knowledge file transfer part 28. The statistical profile generating part 26 is for carrying out a statistical process on a plurality of profiles (each profile corresponding to one waveform) as shown in Fig. 17 to describe the nature of the profiles as a group. the description is in the form a matrix, as explained above for the case of a profile.

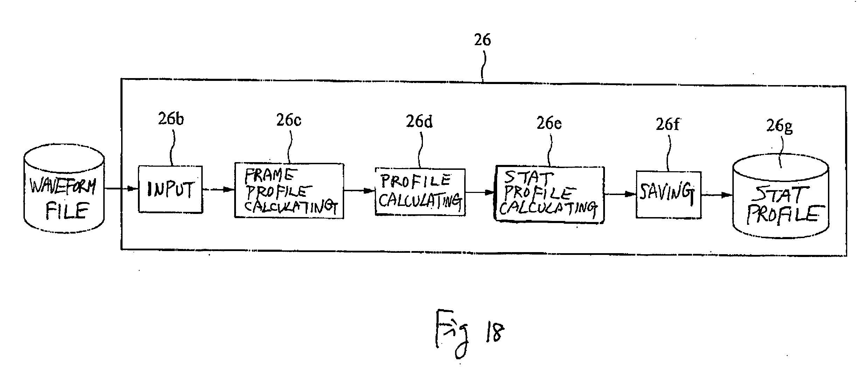

As shown in Fig. 18, the statistical profile generating part 26 is provided with an input part 26b for reading in waveform data specified through the input device 13, a frame profile calculating part 26c for calculating frame profiles (characteristic matrices with characteristic quantities corresponding to the elements of the profile for each frame) for the waveform data read in by the input part 26b, a profile calculating part 26d for generating a profile of the target waveform data to be processed by obtaining the time change data of the frame profile of each frame obtained by the frame profile calculating part 26c according to a preliminarily set parameter (or the algorithm (such as peak-to-peak) for obtaining each element of the profile containing time change data), a statistical profile calculating part 26e for obtaining a statistical profile from the profiles of each of the waveform data obtained by the profile calculating part 16d, and a saving part 26f for saving the statistical profile for each group obtained by the statistical profile calculating part 26e. Each of the processing parts mentioned above except the statistical profile calculating part 36e is basically the same as the corresponding processing part shown in Fig. 5 and hence will not be explained here repetitiously.

As can be understood by comparing Figs. 4 and 17, it is a plurality of frame profiles (in a matrix form) related to the same waveform that are processed by the profile calculating part 21d (26d). While the profile calculating part 21d (26d) produces one matrix-form profile from this plurality of profiles according to a specified algorithm, the object of processing by the statistical profile calculating part 26e is the matrix-form profile of each set of waveform data belonging to the same group (OK or NG), and the profile calculating part 21d (26d) carries out a specified statistical operation on this plurality of profiles to generate one matrix-form statistical profile. Examples of the statistical process include calculation of maximum, minimum and average.

Thus, basically similar units may be used for the profile calculating part 26d and the statistical profile calculating part 26e although they are different in terms of the data to be inputted (frame profile or profile) and the data to be outputted (profile or statistical profile). The calculation process (algorithm) used for generating a profile and that used for generating a statistical profile may be the same or different. A buffer memory for saving profiles of a plurality of sets of waveform data may also be provided, as explained above regarding the profile calculating part 26d, to provide the function of storing profiles sequentially given to the statistical profile calculating part 26e from the profile calculating part for each group.

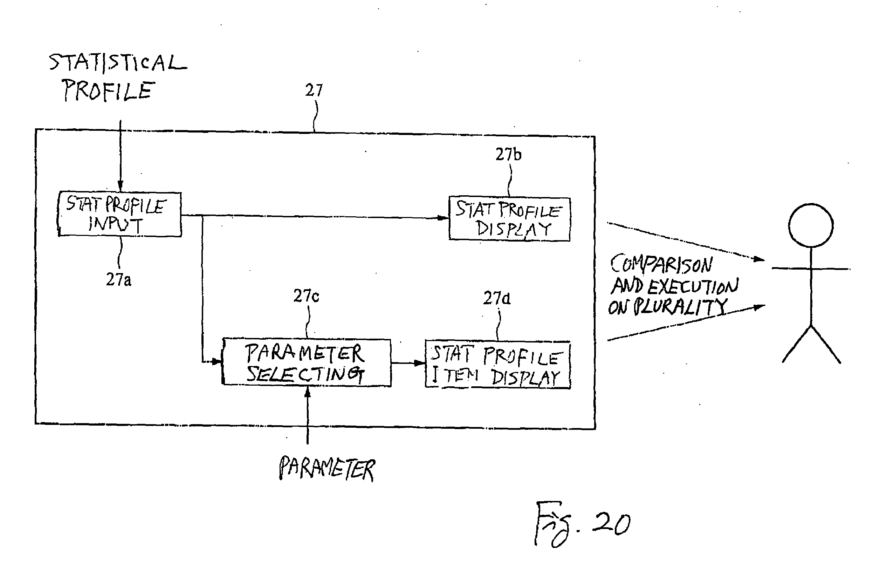

In a situation where profiles are already generated and stored in the profile database 21 g, the statistical profile generating part 26 may be formed, as shown in Fig. 19, such that specified profiles are read out of this profile database 21g to the statistical profile calculating part 26e to obtain a statistical profile,
As shown in Fig. 20, the profile comparing part 27 is provided with a statistical profile input part 27a, a statistical profile display part 27b, a parameter selecting part 27c and a statistical profile item display part 27d. As can be clearly understood by comparing Fig. 12 and Fig. 20, the function of each part is basically the same as that of the corresponding part although the one sheet of matrix-form data to be processed is a profile data of one waveform data item in one case and one statistical profile data item assembling a plurality of profiles in the other case. Thus, the display screen may be as shown in Fig. 13.

Fig. 21 shows the concept of the knowledge profile transfer part 28. The aforementioned algorithm generating part 12 has an analytic function for judging the presence or absence of an effective combination of characteristic quantity and parameter and a knowledge generating function for generating a specific judgment algorithm by using the analytic function and based on effective characteristic quantity and parameter. The knowledge profile transfer part 28 is for transferring knowledge data generated by the analytic function to the side of the knowledge generating function. The knowledge generating part 30 which has the knowledge generating function may comprise a device of any known kind.

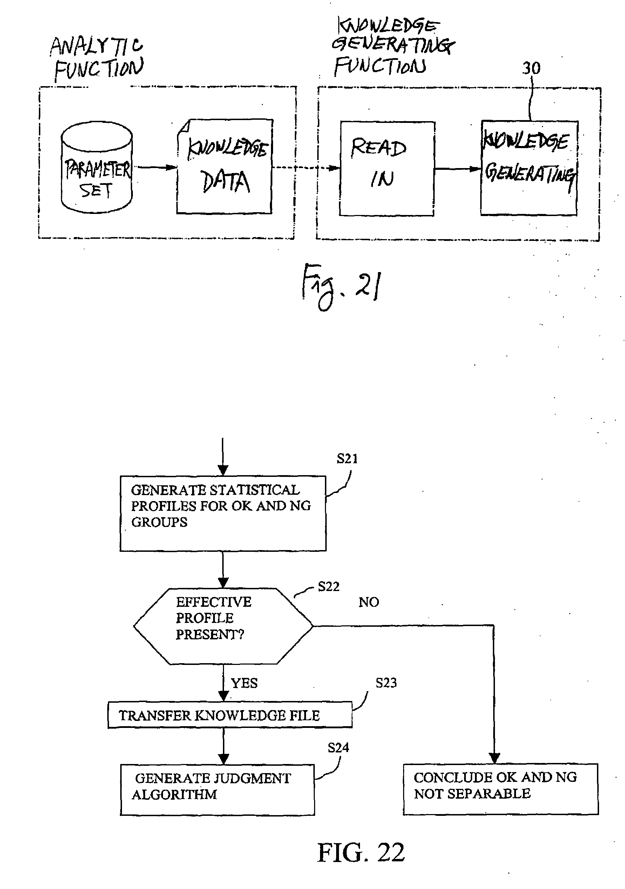

Fig. 22 is a flowchart of the functions and operations of the device according to the third embodiment of the invention. As the statistical profile generating part 26 is operated to read out of the waveform database 11 a specified large number each of normal waveform data for good products and abnormal waveform data for no-good products, statistical profiles each for good products and no-good products are generated (Step S21). The specified large number means a relatively large number suitable for a statistical analysis. The generated statistical profiles are transferred to the profile comparing part 27.

Next, the profile comparing part 27 is operated and a judgment is made whether there is an effective profile (Step S22). This is done by looking for such an effective profile while watching the profiles and radar charts that come to be displayed as the profile comparing part 27 is operated. If no effective profile capable of separating good products from no-good products is found (NO in Step S22), it is concluded that the OK/NG separation cannot be done. According to the present embodiment of the invention, the final determination whether an effective profile or not is made by the user while looking at the display screen. Alternatively, the profile comparing part may be allowed to automatically judge if the values of characteristic quantities of good and no-good products are separated by an amount greater than a preliminarily defined threshold value and also depending upon whether or not the values of a characteristic quantity remain within a small range.

If an effective profile is present (YES in Step S22), the knowledge profile transfer part 28 is operated to transfer a knowledge file based on the detected effective profile to the knowledge generating function (Step S23). The knowledge generating function generates a judgment algorithm based on the obtained knowledge (S24) and ends the routine. The generated judgment algorithm is stored in the memory 15.

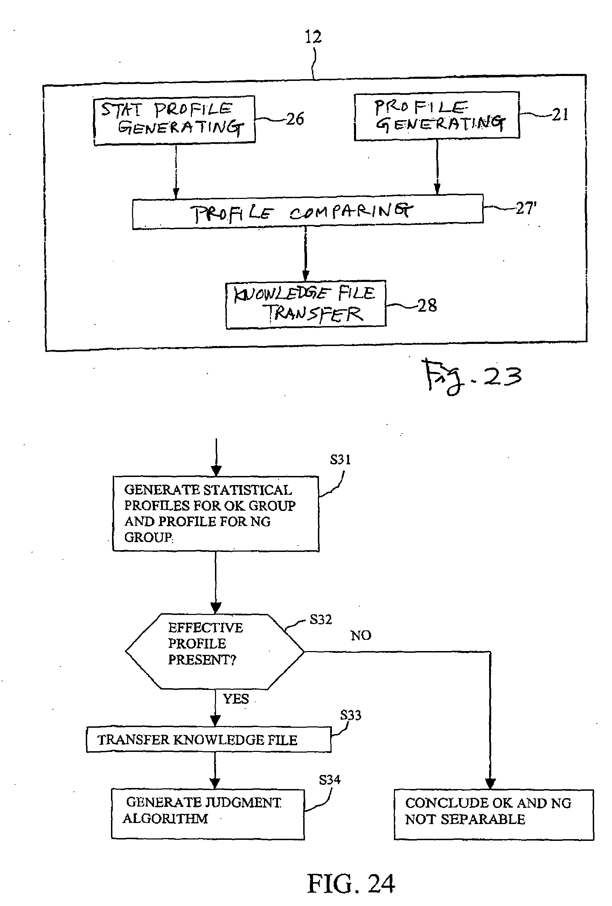

Fig. 23 shows a portion of the aid device of Fig. 1 according to a fourth embodiment of the invention. The third embodiment was characterized as collecting many normal (OK) data for good products and many abnormal (NG) data for no-good products and comparing statistical profiles each generated from a different group. The fourth embodiment is characterized in comparing a group of good products (OK) with a no-good (NG) product because there are situations where sample data of good products are relatively easy to collect but those of no-good products are hard to come by such that it is hardly possible to generate a statistical profile.

Thus, the fourth embodiment is provided with a statistical profile generating part 26 for generating a statistical profile from waveform data of many good products, a profile generating part 21 for generating a profile from waveform data of one no-good product, a profile comparing part 27' for comparing the statistical profile generated by the statistical profile generating part 26 and the profile generated by the profile generating part 21, and a file transfer part 28 for transferring to the knowledge generating function a knowledge file containing data from a profile (characteristic quantity and parameter) judged to be effective by the profile comparing part 27. Each of these parts is structured like the corresponding one of the third embodiment and hence its internal structure will not be explained repetitiously.

The profile comparing parts 27 and 27' according to the third embodiment and the fourth embodiment are different in that comparisons are made between statistical profiles according to the third embodiment while it is made between a statistical profile and a profile. Since both a statistical profile and a profile are expressed in the form of a two-dimensional matrix defined by a characteristic quantity axis and a frequency axis, units of similar structures may be used for the two cases. The profile comparing part 27 according to the third embodiment is shown in Fig. 20 as handling only statistical profiles, it may be arranged to handle profiles when no-good products are concerned.

As explained above regarding the third embodiment, the fourth embodiment also may well be carried out by increasing the sample number N after the routine according to the second embodiment is used and the result of the judgment in Step S13 is YES. Although a process of the fourth embodiment of the invention may be carried out without using the device according to the second embodiment of the invention but by preliminarily collecting a large number (such as 100 to 1000) of samples to execute according to the fourth embodiment, if it is judged by executing the second embodiment preliminarily that the OK/NG separation is difficult, it will be preferable not to collect useless samples for good products.

Fig. 24 is a flowchart of the functions and operations of the device according to the fourth embodiment of the invention. As the statistical profile generating part 26 and the profile generating part 21 are operated to read out of the waveform database 11 a specified large number (large enough for being statistically meaningful) of normal waveform data for good products and one waveform data item for a no-good product, a statistical profile for good products and a profile for the no-good product are generated (Step S31). The specified large number means a relatively large number suitable for a statistical analysis. The statistical profile and the profile thus generated are transferred to the profile comparing part 27'.

Next, the profile comparing part 27' is operated and a judgment is made whether there is an effective profile (Step S32). This is done by looking for such an effective profile while watching the profiles and radar charts that come to be displayed as the profile comparing part 27' is operated. If no effective profile capable of separating good products from no-good products is found (NO in Step S32), it is concluded that the OK/NG separation cannot be done. According to the present embodiment of the invention, the final determination whether an effective profile or not is made by the user while looking at the display screen. Alternatively, the profile comparing part may be allowed to automatically judge if the values of characteristic quantities of good and no-good products are separated by an amount greater than a preliminarily defined threshold value and also depending upon whether or not the values of a characteristic quantity remain within a small range.

If an effective profile is present (YES in Step S32), the file transfer part 28 is operated to transfer a knowledge file based on the detected effective profile is transferred to the knowledge generating function (Step S33). The knowledge generating function generates a judgment algorithm based on the obtained knowledge (S34) and ends the routine. The generated judgment algorithm is stored in the memory 15.

In the third and fourth embodiments, the number of profiles (hereinafter inclusive of statistical profiles) to be compared is basically two. Thus, although four profile display areas R3 are shown in Fig. 13, only two of them will be used in these cases.

Since the profile comparison part is required only to compare between profiles and to determined whether they are equal or not, radar charts as shown in Fig. 13 are not necessary. If the number to be compared is only two, such as in the third and fourth embodiments, the same elements (same characteristic quantity and same parameter) of the two profiles may be compared (by subtraction or division, etc.) and the result of such comparison may be displayed as profile comparison data. If the values of the characteristic quantity are close, their differential (obtained by subtraction) will be small and their ratio (obtained by division) will be close to 1. If they are far apart, their differential will be large and their ratio will be far away from 1 (either close to 0 or a large number). If such result of calculation is displayed on a matrix like a profile and a display is made by varying color or color density according to the calculated value, it can be understood easily whether each is an effective combination of characteristic quantity and parameter. In other words, if no effective profile can be found from the result of calculation displayed in such an easily understandable manner, it can be concluded that the OK/NG separation is not possible.

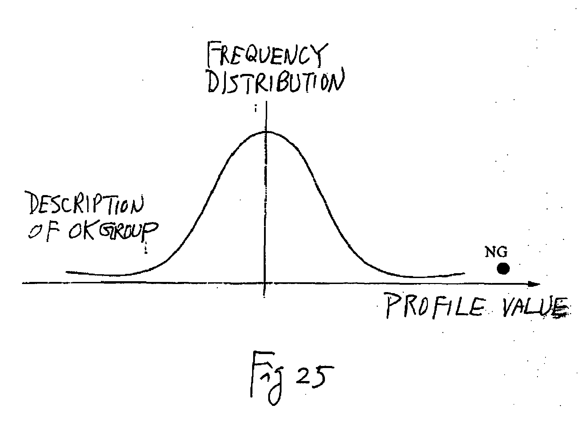

When a comparison is made between a group of good products (OK group) and one no-good (NG) product, as in the fourth embodiment, a frequency distribution (average and spread) of characteristic quantity and frequency as parameters may be obtained regarding the profiles constituting the OK group, as shown in Fig. 25. If the characteristic quantity value of the profile for a no-good product is obtained for the same parameters of characteristic quantity and frequency and displayed on the same graph, it can be judged from the position of the NG whether a separation is possible or not. If separation is not possible with any combination of characteristic quantity and frequency, it is finally concluded that separation is impossible.

## Claims

1. An aid device for an inspection device for judging whether a target object of inspection is normal or not normal based on results obtained by calculating a characteristic quantity of waveform data obtained from said target object of inspection, said aid device providing data for determining an effective characteristic quantity and effective parameters for calculating said effective characteristic quantity for the judging; said aid device comprising:
a frame profile calculating means for dividing given waveform data into frames and obtaining for each of said frames a frame profile having a matrix-form data structure describing characteristic quantities with a characteristic quantity axis and a frequency axis;
a profile calculating means for obtaining a plurality of frame profiles obtained by said frame profile calculating means for same waveform data and obtaining from said plurality of frame profiles a profile having a matrix-form data structure describing characteristic quantities by a characteristic quantity axis and a frequency axis related to said waveform data;
a memory means for storing a plurality of profiles obtained by said profile calculating means for a plurality of sets of waveform data; and
a histogram generating means for carrying out a calculation process on the values of the characteristic quantities at a specified common position in said matrix-form data structure of said plurality of profiles stored in said memory.

2. The aid device of claim 1 wherein said histogram generating means serves to generate and output a histogram of the values of the characteristic quantities at a specified common position.

3. The aid device of claim 1 further comprising:
a display means for simultaneously displaying the plurality of profiles stored in said memory means; and
a specifying means for specifying a common position on the frequency axis of the simultaneously displayed profiles;
wherein said histogram generating means compares values of characteristic quantities at a specified common position and causing said compared values to be displayed.

4. The aid device of claim 3 wherein said histogram generating means generates a radar chart from the values of the characteristic quantity at the specified common position and causes said radar chart to be displayed.

5. The aid device of claim 1 wherein said histogram generating means generates a statistical profile by carrying out a statistical process on the plurality of profiles belonging to the same group and stored in said memory means.

6. The aid device of claim 5 further comprising a profile comparing means for comparing said statistical profile with another profile of waveform data that belong to a different group from said same group.

7. The aid device of claim 5 further comprising a profile comparing means for comparing said statistical profile with another statistical profile of waveform data that belong to a different group from said same group.
